# EUROPÄISCHE PATENTSCHRIFT

(11) **EP 3 191 352 B1**
(45) Veröffentlichungstag und Bekanntmachung des Hinweises auf die Patenterteilung: **04.11.2020**
(21) Anmeldenummer: 15766776.7
(22) Anmeldetag: 10.09.2015
(51) Int. Cl.: B60T 1/14, B61H 7/08

(54) **ABSCHIRMVORRICHTUNG ZUM LEITEN EINES MAGNETISCHEN FELDES FÜR EINE SCHIENENBREMSE, MAGNETKÖRPER FÜR EINE SCHIENENBREMSE, SCHIENENBREMSE FÜR EIN SCHIENENFAHRZEUG UND VERFAHREN ZUM BETREIBEN EINER SCHIENENBREMSE MIT EINER ABSCHIRMVORRICHTUNG**
SHIELDING DEVICE FOR CONDUCTING THE MAGNETIC FIELD OF A RAIL BRAKE, MAGNETIC ELEMENT FOR A RAIL BRAKE, RAIL BRAKE FOR A RAIL VEHICLE AND METHOD TO USE A RAIL BRAKE
DISPOSITIF DE BLINDAGE POUR LA CONDUCTION DU CHAMP MAGNÉTIQUE DE UN FREIN FERROVIAIRE, ÉLÉMENT MAGNÉTIQUE POUR UN FREIN FERROVIAIRE, FREIN FERROVIAIRE POUR UN VÉHICULE ET PROCÉDÉ POUR LA UTILISATION DE UN FREIN FERROVIAIRE

(30) Priorität: 11.09.2014 DE 102014113144
(43) Veröffentlichungstag der Anmeldung: 19.07.2017
(73) Patentinhaber: Knorr-Bremse GmbH, 2340 Mödling (AT)
(72) Erfinder: KOIDL,Hermann, A-1140 Wien (AT); RATHAMMER, Richard, A-2262 Stillfried-Grub (AT); MAGYAR, Peter, A-1030 Wien (AT); LEHMANN, Henry, A-2371 Hinterbrühl (AT)
(74) Vertreter: Aurigium Leischner & Luthe
(86) Internationale Anmeldenummer: PCT/EP2015/070747
(87) Internationale Veröffentlichungsnummer: WO 2016/038154

(56) Entgegenhaltungen:
- DE-B4-102012 014 888
- US-A- 3 768 607

## Beschreibung

Die vorliegende Erfindung bezieht sich auf eine Abschirmvorrichtung zum Leiten eines magnetischen Feldes für eine Schienenbremse eines Schienenfahrzeugs, einen Magnetkörper für eine Schienenbremse eines Schienenfahrzeugs, eine Schienenbremse für ein Schienenfahrzeug sowie ein Verfahren zum Betreiben einer Schienenbremse mit einer Abschirmvorrichtung.

Schienenfahrzeuge weisen in der Regel eine Schienenbremse als Wirbelstrombremse oder Magnetschienenbremse auf, die beispielsweise zwischen den Rädern in der Nähe der Schiene angeordnet ist. Schienenbremsen können heute eine starke Wechselwirkung bis hin zur Störung von signaltechnischen Geräten, wie Radsensoren oder Achszählern, aufweisen.

Die Patentschrift DE 102012014888 B4 offenbart eine Vorrichtung zur Beaufschlagung wenigstens einer elektrischen Spule einer Schienenbremse eines Schienenfahrzeugs mit wenigstens einem elektrischen Impuls.

Die Druckschrift US 3 768 607 A offenbart eine elektromagnetische Bremse.

Die Druckschrift DE 10 2012 014 888 84 offenbart eine Vorrichtung zur Beaufschlagung wenigstens einer elektrischen Spule einer Schienenbremse eines Schienenfahrzeugs mit wenigstens einem elektrischen Impuls.

Es ist die Aufgabe der vorliegenden Erfindung eine verbesserte Schienenbremse eines Schienenfahrzeugs zu schaffen.

Diese Aufgabe wird durch eine Abschirmvorrichtung zum Leiten eines magnetischen Feldes für eine Schienenbremse eines Schienenfahrzeugs, einen verbesserten Magnetkörper für eine Schienenbremse eines Schienenfahrzeugs, eine verbesserte Schienenbremse für ein Schienenfahrzeug sowie ein Verfahren zum Betreiben einer Schienenbremse mit einer Abschirmvorrichtung gemäß den unabhängigen Ansprüchen gelöst.

Signaltechnische Geräte können empfindlich auf abgestrahlte oder reflektierte magnetische oder elektrische Felder reagieren. Abhängig vom eingesetzten Material kann eine Schienenbremse auf ein signaltechnisches Gerät wirken. Durch eine Abschirmung der Schienenbremse kann eine fehlerhafte Interpretation von Signalen in dem signaltechnischen Gerät vermieden werden. Eine geschichtete Anordnung von ferromagnetischen Schichten kann die von signaltechnischen Geräten abgestrahlten magnetischen oder elektrischen Felder um den Körper einer Schienenbremse führen.

Eine Abschirmvorrichtung zum Leiten eines magnetischen Feldes für eine Schienenbremse eines Schienenfahrzeugs, wobei die Schienenbremse zumindest einen Magnetkörper aufweist, umfasst:
eine erste Schicht, die an dem Magnetkörper angeordnet oder anordenbar ist;
zumindest eine zweite Schicht, wobei sich eine äußere Kontur der ersten Schicht von einer äußeren Kontur der zweiten Schicht unterscheidet; und
eine Isolationsschicht, die zwischen der ersten Schicht und der zweiten Schicht angeordnet ist, wobei die Isolationsschicht ausgebildet ist, um eine elektrische Isolation der beiden Schichten gegeneinander zu schaffen.

Unter einem Schienenfahrzeug kann ein auf Schienen fahrendes Fahrzeug verstanden werden. An der Schiene kann ein signaltechnisches Gerät wie ein Radsensor oder ein Achszähler installiert sein. Das Schienenfahrzeug weist eine Schienenbremse mit einem Magnetkörper auf. Dabei kann unter einer Schienenbremse eine Magnetschienenbremse oder eine Wirbelstrombremse verstanden werden. Die Abschirmvorrichtung kann an dem Magnetkörper der Schienenbremse angeordnet sein. Die erste Schicht und die zweite Schicht der Abschirmvorrichtung können ein leitfähiges Material aufweisen, wobei die erste Schicht und die zweite Schicht durch die Isolationsschicht voneinander getrennt sind. Die erste Schicht und die zweite Schicht können durch zwei Isolationsschichten voneinander getrennt sein. Die Schichten können eine räumliche Ausdehnung haben und eine Kontur aufweisen. Dabei kann unter einer Kontur ein Umriss verstanden werden. Unter einer Kontur kann auch eine dreidimensionale Form der ersten Schicht und der zweiten Schicht verstanden werden. Die erste Schicht, die zweite Schicht und die dazwischen angeordnete Isolationsschicht können als ein Schichtstapel angeordnet sein. Eine Anordnung der ersten Schicht, der zweiten Schicht und der dazwischen angeordneten Isolationsschicht kann dabei als Schichtung bezeichnet werden.

In einer günstigen Ausführungsform kann die erste Schicht ein erstes leitfähiges und/oder ferromagnetisches Material aufweisen. Ergänzend kann die zweite Schicht ein zweites leitfähiges und/oder ferromagnetisches Material aufweisen. Dabei können das erste leitfähige oder ferromagnetische Material und das zweite leitfähige oder ferromagnetische Material identisch sein oder voneinander verschieden sein.

Günstig ist es auch, wenn die Abschirmvorrichtung eine dritte Schicht und eine weitere Isolationsschicht aufweist. Dabei kann die Isolationsschicht zwischen der zweiten Schicht und der dritten Schicht angeordnet sein. Die weitere Isolationsschicht kann eine elektrische Isolation der zweiten Schicht und der dritten Schicht gegeneinander schaffen. Ferner kann eine äußere Kontur der dritten Schicht der äußeren Kontur der zweiten Schicht oder der äußeren Kontur der ersten Schicht entsprechen. Vorteilhaft kann die dritte Schicht ein leitfähiges oder ferromagnetisches Material aufweisen. So können die erste Schicht, die zweite Schicht und die dritte Schicht einen Schichtstapel bilden, wobei die Schichten durch Isolationsschichten voneinander getrennt sind. In einer günstigen Ausführungsform kann die Abschirmvorrichtung eine vierte Schicht aufweisen, wobei die vierte Schicht durch eine zusätzliche Isolationsschicht von der dritten Schicht getrennt ist.

Ein Elektroblech und ergänzend oder alternativ ein Transformatorenblech kann als die erste Schicht, zweite Schicht und ergänzend oder alternativ als dritte Schicht verwendet werden. Dabei kann das Elektroblech und ergänzend oder alternativ das Transformatorenblech die Isolationsschicht umfassen. Das Elektroblech oder Transformatorenblech kann einen weichmagnetischen Werkstoff umfassen. Die Isolationsschicht kann als Phosphatierungsschicht ausgebildet sein. Dabei kann es sich um einen nichtkornorientierten oder einen kornorientierten Werkstoff bei dem Elektroblech handeln. Unter einem Elektroblech kann ein kaltgewalztes Band aus einer Eisen-Silizium-Legierung oder daraus gefertigte, beispielsweise geschnittene oder gestanzte Körper verstanden werden. Das Elektroblech kann der Norm EN 10106 oder der Norm EN 10107 entsprechen. So können eine Mehrzahl von Elektroblechen gestapelt werden und die Abschirmvorrichtung bilden. So kann die Abschirmvorrichtung zumindest ein erstes Elektroblech und ein zweites Elektroblech umfassen, wobei sich eine äußere Kontur des ersten Elektroblechs von einer äußeren Kontur des zweiten Elektroblechs unterscheidet. Dabei kann das erste Elektroblech direkt an einer Oberfläche des Magnetkörpers anordenbar sein. Das zweite Elektroblech kann an einer an dem Magnetkörper anliegenden Oberfläche gegenüberliegenden Oberfläche des ersten Elektroblechs angeordnet sein. Die Abschirmvorrichtung kann geblecht ausgeformt sein.

Ein Magnetkörper für eine Schienenbremse eines Schienenfahrzeugs umfasst zumindest eine Abschirmvorrichtung gemäß einer Variante einer hier vorgestellten Ausführungsform. Die Abschirmvorrichtung kann an einer Oberfläche des Magnetkörpers angeordnet sein. Die Abschirmvorrichtung kann auf einer Seite des Magnetkörpers angeordnet sein. Alternativ kann die Abschirmvorrichtung auf zwei Seiten des Magnetkörpers angeordnet sein. Dabei kann eine Seite des Magnetkörpers teilweise durch die Abschirmvorrichtung bedeckt sein.

Der Magnetkörper kann zumindest eine zweite Abschirmvorrichtung aufweisen. Die erste Abschirmvorrichtung und die zweite Abschirmvorrichtung können benachbart zueinander angeordnet sein. Dabei kann die erste Abschirmvorrichtung auf einer ersten Seite und auf einer zweiten Seite des Magnetkörpers angeordnet sein. Die zweite Abschirmvorrichtung kann auf der zweiten Seite und einer dritten Seite des Magnetkörpers angeordnet sein. Vorteilhaft kann eine einfache Montage der Abschirmvorrichtung an dem Magnetkörper realisiert werden.

Die Abschirmvorrichtung kann im montierten Zustand des Magnetkörpers oder der Schienenbremse auf einer der Schiene zugewandten Seite des Magnetkörpers angeordnet sein. Ergänzend kann die Abschirmvorrichtung im montierten Zustand des Magnetkörpers oder der Schienenbremse im Schienenfahrweg nach innen gerichtet angeordnet sein. Ferner kann die Abschirmvorrichtung im montierten Zustand des Magnetkörpers oder der Schienenbremse im Schienenfahrweg nach außen gerichtet angeordnet sein. Auch kann die Abschirmvorrichtung im montierten Zustand des Magnetkörpers auf einer, der Schiene zugewandten und einer hierzu anschließenden, Seitenfläche des Magnetkörpers, die nach innen oder alternativ nach außen gerichtet ist, angeordnet sein. Wenn an einem Magnetkörper zumindest zwei Abschirmvorrichtungen angeordnet sind, kann die erste Abschirmvorrichtung im montierten Zustand der Schienenbremse zumindest teilweise im Schienenfahrweg nach innen gerichtet angeordnet sein und die zweite Abschirmvorrichtung im montierten Zustand der Schienenbremse zumindest teilweise im Schienenfahrweg nach außen gerichtet angeordnet sein. Dabei können die erste Abschirmvorrichtung und die zweite Abschirmvorrichtung zueinander elektrisch isoliert sein.

Der Magnetkörper kann zumindest eine Befestigungseinrichtung zum Befestigen der Abschirmvorrichtung an dem Magnetkörper oder einem Element des Magnetkörpers aufweisen. Unter einer Befestigungseinrichtung kann dabei ein Verbindungselement, eine Schraube, ein Bolzen, eine Niete oder eine andere mechanische Einrichtung zum Verbinden von zumindest zwei Körpern verstanden werden. Die Befestigungsserinrichtung kann zur ersten Schicht und zur zweiten Schicht elektrisch isoliert sein. Wenn die Abschirmvorrichtung weitere Schichten umfasst, so kann die Befestigungsserinrichtung auch zu den weiteren Schichten elektrisch isoliert sein. So kann eine leitfähige Brücke oder Verbindung zwischen einzelnen Schichten einfach und effizient vermieden werden.

Es wird eine Schienenbremse für ein Schienenfahrzeug vorgestellt, wobei die Schienenbremse eine Abschirmvorrichtung und ergänzend oder alternativ einen Magnetkörper gemäß einer Variante einer zuvor beschriebenen Ausführungsform aufweist. So können vorteilhaft die von signaltechnischen Geräten abgestrahlten magnetischen Felder um die Schienenbremse herumgeführt werden. Vorteilhaft ergibt sich eine geringere Beeinflussung des signaltechnischen Geräts gegenüber einer Schienenbremse ohne eine Abschirmvorrichtung.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Schienenfahrzeugs mit einer Schienenbremse gemäß einem Ausführungsbeispiel der vorliegenden Erfindung;
- Fig. 2: eine schematische Darstellung eines Magnetkörpers für eine Schienenbremse gemäß einem Ausführungsbeispiel der vorliegenden Erfindung;
- Fig. 3: eine schematische Schnittdarstellung eines Magnetkörpers gemäß einem Ausführungsbeispiel der vorliegenden Erfindung;
- Fig. 4: eine 3D-Darstellung einer Schienenbremse mit einer Abschirmvorrichtung gemäß einem Ausführungsbeispiel der vorliegenden Erfindung;
- Fig. 5: eine 3D-Darstellung einer Schienenbremse mit einer Abschirmvorrichtung gemäß einem Ausführungsbeispiel der vorliegenden Erfindung;
- Fig. 6: eine 3D-Darstellung eines Magnetkörpers mit daran angeordneter Abschirmvorrichtung gemäß einem Ausführungsbeispiel der vorliegenden Erfindung;
- Fig. 7: eine vereinfachte Darstellung eines Transformatorenblechs einer Abschirmvorrichtung gemäß einem Ausführungsbeispiel der vorliegenden Erfindung;
- Fig. 8: eine 3D-Darstellung einer Schienenbremse mit daran angeordneter Abschirmvorrichtung gemäß einem Ausführungsbeispiel der vorliegenden Erfindung; und
- Fig. 9: ein Ablaufdiagramm eines Verfahrens gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

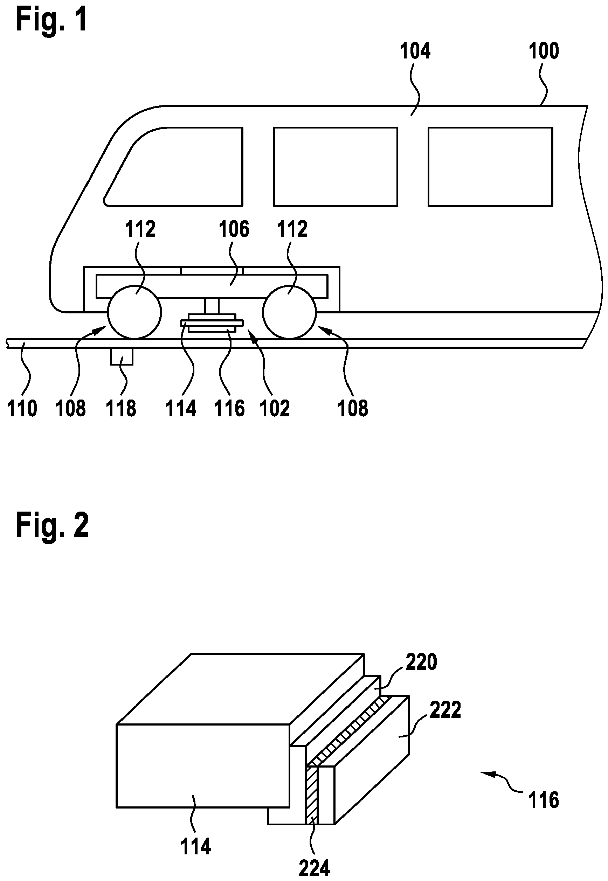

Fig. 1 zeigt eine schematische Darstellung eines Schienenfahrzeugs 100 mit einer Schienenbremse 102 in einer Seitenansicht gemäß einem Ausführungsbeispiel der vorliegenden Erfindung. Das Schienenfahrzeug 100 weist einen Wagenkasten 104, zumindest ein Drehgestell 106 mit zwei Radsätzen 108 auf. Das Drehgestell 106 ist ausgebildet, sich in einem Gleisbogen gegenüber dem Wagenkasten 104 zu verdrehen. Das Schienenfahrzeug 100 ist auf einer Schiene 110 angeordnet. Die Radscheiben 112 der beiden Radsätze 108 stehen in direktem Kontakt zur Schiene 110.

Zwischen den Radscheiben 112 der beiden Radsätze 108 ist eine Schienenbremse 102 angeordnet. Bei der Schienenbremse 102 kann es sich um eine Wirbelstrombremse, eine Magnetschienenbremse oder eine Kombination von diesen handeln. Die Schienenbremse 102 ist ausgebildet, bei einer Aktivierung mittels eines Bremssignals den Abstand zwischen der Schienenbremse 102 und der Schiene 110 zu verringern, wodurch eine bremsende Reibungskraft entsteht. Ergänzend tritt eine Wirbelstrominduktion in der Schiene 110 auf, die eine der Bewegung des Schienenfahrzeugs 100 entgegenwirkende Kraft erzeugt. Die beiden Bremskräfte ergänzen sich dabei. Die Schienenbremse 102 umfasst zumindest einen Magnetkörper 114, an dem zumindest eine Abschirmvorrichtung 116 angeordnet ist.

An der Schiene 110 ist ein signaltechnisches Gerät 118 angeordnet. Bei dem signaltechnischen Gerät 118 handelt es sich in einem Ausführungsbeispiel beispielsweise um eine Achszähleinrichtung, einen Radsensor oder einen Signalgeber.

Die Abschirmvorrichtung 116 wird in einem in Fig. 1 nicht explizit dargestellten Ausführungsbeispiel durch eine 3-dimensionale mäanderförmig geschichtete Anordnung von ferromagnetischen Bändern geschaffen. Die Abschirmvorrichtung 116 ist ausgebildet, die von den signaltechnischen Geräten 118 abgestrahlten magnetischen Felder um die großen und kompakten metallischen Körper der Schienenbremse 102 herumzuführen, sodass sich eine geringere Beeinflussung der signaltechnischen Geräte 118 ergibt.

Vorteilhaft wird der Anwendungsbereich von Schienenbremsen - nutzbare Infrastrukturohne Änderungen der infrastrukturseitigen signaltechnischen Geräte 118 erweitert.

Wie in den folgenden Figuren detaillierter beschrieben, sind in einem Ausführungsbeispiel um den kompakten metallischen Magnetkörper 114 der Schienenbremse 102 zusätzliche dünne ferromagnetische Schichten (Bänder oder Bleche) angebracht. Die geschichteten ferromagnetischen Schichten bilden die Abschirmvorrichtung 116. Dabei unterscheidet sich in einem Ausführungsbeispiel die äußere Kontur jeder einzelnen Schicht. Damit wird eine mäanderförmige Struktur geschaffen. Die ferromagnetischen Schichten sind gegeneinander elektrisch isoliert. Bei einer Befestigung der Schichten durch eine Befestigungseinrichtung wie beispielsweise eine Schraubverbindung ist die Schraube elektrisch von den ferromagnetischen Schichten isoliert.

In alternativen Ausführungsbeispielen wird mehr als ein elektrisch leitfähiges und ergänzend oder alternativ ferromagnetisches Material für die Abschirmvorrichtung 116 kombiniert.

Optional weisen dabei mehrere Schichten die gleiche äußere Kontur auf. Die Abschirmvorrichtung wird aus zumindest zwei voneinander isolierten Schichten gebildet. In einer Variante unterscheidet sich die Schichtung in vertikaler Richtung von der in lateraler Richtung. Die Schichtung kann sich in longitudinaler Richtung von der in lateraler Richtung unterscheiden.

Die ferromagnetischen Schichten der Abschirmvorrichtung 116 sind in einer Variante über die gesamte Länge des kompakten Magnetkörpers 114 in mehrere Segmente unterteilt. Optional sind die die Abschirmvorrichtung 116 bildenden ferromagnetischen Schichten nur auf einer Seite, wie beispielsweise einer Gleisinnenseite oder Gleisaußenseite, des Magnetkörpers 114 angeordnet. So sind in einem optionalen Ausführungsbeispiel nur Teile des Magnetkörpers 114 mit den ferromagnetischen Schichten zur Abschirmung versehen.

Wenn auf beiden Seiten des kompakten Magnetkörpers 114 die Abschirmvorrichtung 116 bildende ferromagnetische Schichten angebracht sind, so sind diese zueinander elektrisch isoliert.

Fig. 2 zeigt eine schematische Darstellung eines Magnetkörpers 114 für eine Schienenbremse eines Schienenfahrzeugs gemäß einem Ausführungsbeispiel der vorliegenden Erfindung. Bei der Schienenbremse kann es sich um ein Ausführungsbeispiel einer in Fig. 1 gezeigten Schienenbremse 102 handeln. Der Magnetkörper 114 weist eine quaderförmige Grundform auf. An dem Magnetkörper 114 ist eine Abschirmvorrichtung 116 angeordnet. Dabei umfasst die Abschirmvorrichtung 116 eine erste Schicht 220, eine zweite Schicht 222 sowie eine zwischen der ersten Schicht 220 und der zweiten Schicht 222 angeordnete Isolationsschicht 224. Die erste Schicht 220 ist an dem Magnetkörper 114 angeordnet. Die Isolationsschicht 224 schafft eine elektrische Isolation der ersten Schicht 220 gegenüber der zweiten Schicht 222.

In dem in Fig. 2 dargestellten Ausführungsbeispiel weist die erste Schicht 220 eine einem L-Profil ähnliche Form auf. Die zweite Schicht 222 weist eine einem Band ähnliche Form auf. Somit unterscheidet sich die äußere Kontur der ersten Schicht 220 und der zweiten Schicht 222 voneinander. In einem nicht gezeigten Ausführungsbeispiel weisen sowohl die erste Schicht 220 als auch die zweite Schicht 222 eine L-förmige Grundform auf, wobei sich die Schenkellängen voneinander unterscheiden. In einem weiteren Ausführungsbeispiel weisen die erste Schicht 220 und die zweite Schicht 222 eine unterschiedliche Schichtdicke auf. In günstigen Ausführungsbeispielen weisen die leitfähigen Schichten 220, 222 eine Schichtdicke von zumindest 0,3 Millimetern auf, beispielsweise eine Schichtdicke von zumindest 0,5 Millimetern.

In einem Ausführungsbeispiel weist die erste Schicht 220 und die zweite Schicht 222 ein leitfähiges, ferromagnetisches Material auf. Wie in der folgenden Figur beschrieben, können die leitfähigen Schichten 220, 222 aus einem Elektroblech gefertigt sein, wobei das Elektroblech die Isolationsschicht 224 direkt umfasst.

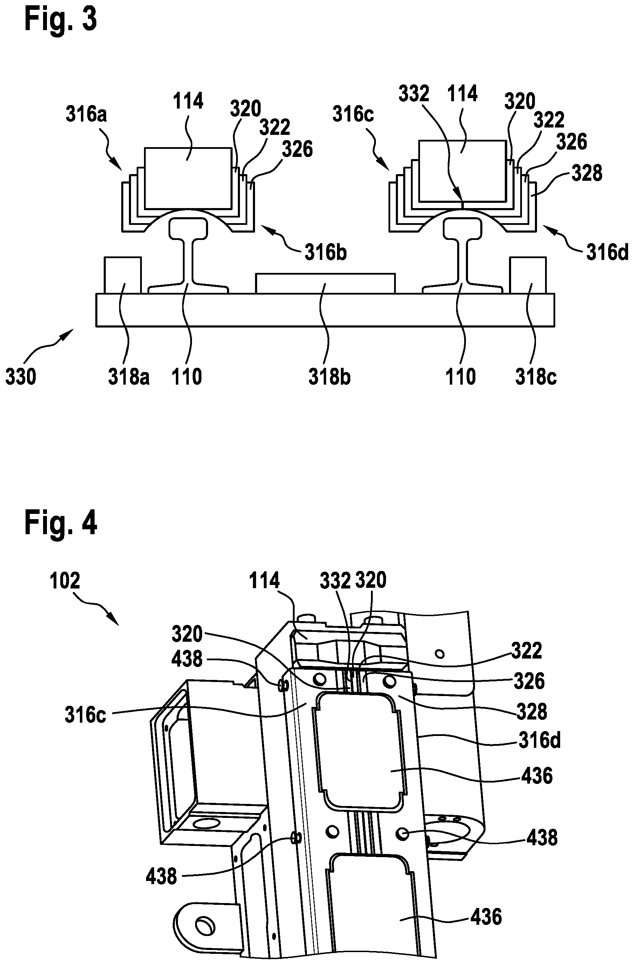

Fig. 3 zeigt eine schematische Schnittdarstellung eines Magnetkörpers114 in Bezug zu einem Schienenfahrweg 330 gemäß einem Ausführungsbeispiel der vorliegenden Erfindung. Dabei wird der Schienenfahrweg 330 auch als Fahrweg 330 bezeichnet. Bei dem Magnetkörper 114 kann es sich um ein Ausführungsbeispiel eines in den vorangegangenen Figuren beschriebenen Magnetkörper 114 handeln. Der Schienenfahrweg 330 umfasst zwei parallel angeordnete Schienen 110. Im Bereich des Schienenfahrwegs 330 sind signaltechnische Geräte 318a, 318b, 318c angeordnet. Bei den signaltechnischen Geräten 318a, 318b, 318c handelt es sich um Ausführungsbeispiele des in Fig. 1 beschriebenen signaltechnischen Geräts 118. So ist das erste signaltechnische Gerät 318a in Fig. 3 links außerhalb des Schienenfahrwegs 330 angeordnet. Das zweite signaltechnische Gerät 318b ist im Schienenfahrweg 330 zwischen den Schienen 110 angeordnet. Ferner ist in Fig. 3a das dritte signaltechnische Gerät 318c rechts außerhalb des Schienenfahrwegs 330 angeordnet. Oberhalb der Schienen 110 ist jeweils ein Magnetkörper 114 mit jeweils zwei an dem Magnetkörper angeordneten Abschirmvorrichtungen 316a, 316b, 316c, 316d angeordnet.

Der in der Darstellung in Fig. 3 linke Magnetkörper 114 weist zwei dreilagige Abschirmvorrichtungen 316a, 316b auf. Die Abschirmvorrichtungen 316a, 316b umfassen eine erste ferromagnetische Schicht 320, eine zweite ferromagnetische Schicht 322 sowie eine dritte ferromagnetische Schicht 326. Bei den ferromagnetischen Schichten 320, 322, 326 handelt es sich in diesem Ausführungsbeispiel um Elektrobleche 320, 322, 326. Die Elektrobleche 320, 322, 326 weisen auf ihrer Oberfläche eine Isolationsschicht auf, sodass die einzelnen Elektrobleche 320, 322, 326 voneinander elektrisch isoliert sind. Die Elektrobleche 320, 322, 326 weisen näherungsweise ein L-Profil auf, wobei sich eine Schenkellänge der einzelnen Profile voneinander unterscheidet. Jeweils ein Schenkel des L-Profils der Elektrobleche 320, 322, 326 ist auf der in Richtung der Schiene 110 ausgerichteten Seite des Magnetblocks 114 angeordnet. Der jeweils andere Schenkel des L-Profils der Elektrobleche 320, 322, 326 weist für die erste Abschirmvorrichtung 316a des links angeordneten Magnetkörpers 114 im Schienenfahrweg 330 nach außen und für die zweite Abschirmvorrichtung 316b des links angeordneten Magnetkörpers 114 im Schienenfahrweg 330 nach innen.

Der in der Darstellung in Fig. 3 rechte Magnetkörper 114 weist zwei vierlagige Abschirmvorrichtungen 316c, 316d auf. Der Übersichtlichkeit halber sind die vier ferromagnetischen Schichten, die aus Elektroblechen gebildet werden, nur für die rechts angeordnete Abschirmvorrichtung 316c mit einzelnen Bezugszeichen versehen. Die Abschirmvorrichtungen 316c, 316d umfassen eine erste ferromagnetische Schicht 320, eine zweite ferromagnetische Schicht 322, eine dritte ferromagnetische Schicht 326 sowie eine vierte ferromagnetische Schicht 328. Bei den ferromagnetischen Schichten 320, 322, 326, 328 handelt es sich in diesem Ausführungsbeispiel um Elektrobleche 320, 322, 326, 328. Die Elektrobleche 320, 322, 326, 328 weisen auf ihrer Oberfläche eine Isolationsschicht auf, sodass die einzelnen Elektrobleche 320, 322, 326, 328 voneinander elektrisch isoliert sind. Die Elektrobleche 320, 322, 326, 328 weisen näherungsweise die Form eines L-Profils auf. Die Anordnung der Abschirmvorrichtungen 316c, 316d entspricht weitgehend der Anordnung der Abschirmvorrichtung 316a, 316b des in der Darstellung in Fig. 3 linken Magnetkörpers 114. Die erste Abschirmvorrichtung 316c weist im Schienenfahrweg 330 nach innen. Die zweite Abschirmvorrichtung 316d weist im Schienenfahrweg 330 nach außen. Eine erste ferromagnetische Schicht der beiden Abschirmvorrichtungen 316c, 316d ist durch eine elektrische Isolation 332 voneinander elektrisch getrennt.

Fig. 4 zeigt eine vereinfachte 3D-Darstellung einer Schienenbremse 102 mit einer montierten Abschirmvorrichtung 316c, 316d gemäß einem Ausführungsbeispiel der vorliegenden Erfindung. Bei der Schienenbremse 102 kann es sich um ein Ausführungsbeispiel einer in Fig. 1 gezeigten Schienenbremse 102 handeln. Bei den Abschirmvorrichtungen 316c, 316d kann es sich um Ausführungsbeispiele der in Fig. 1 gezeigten Abschirmvorrichtung 116 handeln. Die Schienenbremse 102 weist zumindest einen Magnetkörper 114 und zwei Schleifschuhe 436 auf. An dem sich längs erstreckenden Magnetkörper 114 sind eine erste Abschirmvorrichtung 316c und eine zweite Abschirmvorrichtung 316d angeordnet. Die beiden Abschirmvorrichtungen 316c, 316d umfassen jeweils vier Elektrobleche 320, 322, 326, 328 als ferromagnetische Schichten 320, 322, 326, 328. Die Abschirmvorrichtungen 316c, 316d weisen näherungsweise die Form eines L-Profils auf, wobei ein Schenkel des L-Profils eine kammartige Form aufweist. Dabei umschließen Zinken der kammartigen Form die Schleifschuhe 436. Die ersten ferromagnetischen Schichten 320 der beiden Abschirmvorrichtungen 316c, 316d sind an einer sich gegenüberliegenden Stirnseite durch eine elektrische Isolation 332 voneinander getrennt.

Die an den Magnetkörper 114 anschließende erste ferromagnetische Schicht 320 weist die größte Schenkellänge des L-Profils auf. Mit zunehmendem Abstand zu dem Magnetkörper 114 sind die Schenkel des L-Profils der ferromagnetischen Schichten 320, 322, 326, 328 beziehungsweise der Elektrobleche 320, 322, 326, 328 kürzer.

Die Abschirmvorrichtungen 316c, 316d sind mittels Befestigungseinrichtungen 438 mit dem Magnetkörper 114 verbunden. Bei dem in Fig. 4 gezeigten Ausführungsbeispiel handelt es sich bei den Befestigungseinrichtungen 438 um Schrauben 438. In einem nicht gezeigten Ausführungsbeispiel wird als Befestigungseinrichtung 438 ein Bolzen oder eine Niete verwendet.

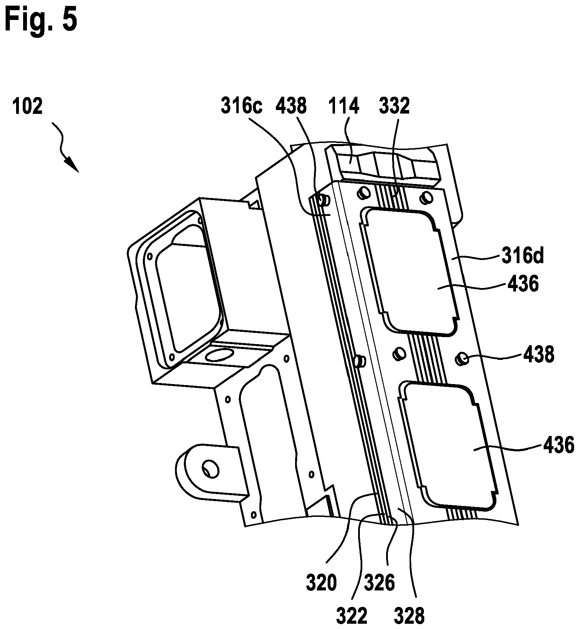

Fig. 5 zeigt eine vereinfachte 3D-Darstellung einer Schienenbremse 102 mit einer montierten Abschirmvorrichtung 316c, 316d gemäß einem Ausführungsbeispiel der vorliegenden Erfindung. Bei der Darstellung kann es sich um ein Ausführungsbeispiel einer in Fig. 4 gezeigten Schienenbremse 102 handeln, die aus einer anderen Perspektive gezeigt ist.

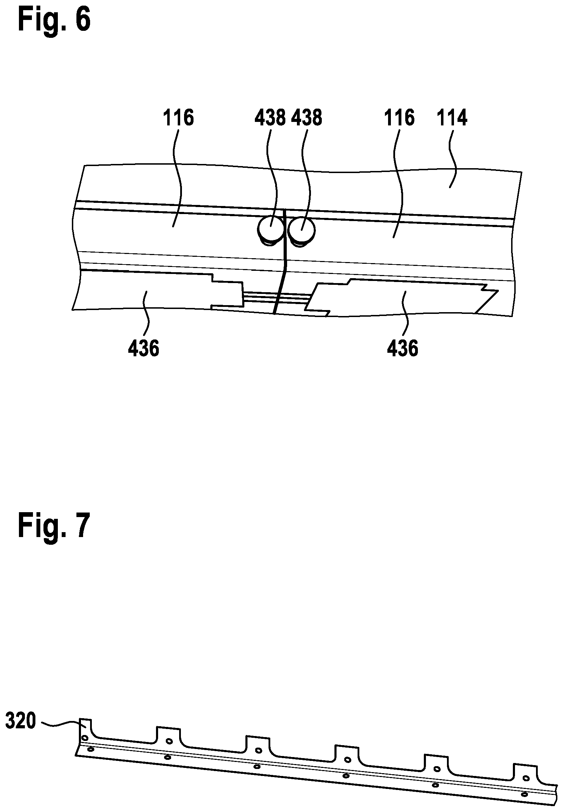

Fig. 6 zeigt eine 3D-Darstellung eines Magnetkörpers 114 mit daran angeordneter Abschirmvorrichtung 116 gemäß einem Ausführungsbeispiel der vorliegenden Erfindung. Bei dem Magnetkörper 114 und der Abschirmvorrichtung 116 kann es sich um Ausführungsbeispiele von in den vorangegangenen Figuren gezeigten Magnetkörper 114 und der Abschirmvorrichtung 116 handeln. Bei den Abschirmvorrichtungen 116 kann es sich auch um Ausführungsbeispiele der in Fig. 3 bis Fig. 5 gezeigten Abschirmvorrichtungen 316a, 316b, 316c, 316d handeln. An dem Magnetkörper 114 sind vier Abschirmvorrichtungen 116 angeordnet. Die Abschirmvorrichtung 116 weisen ein L-förmiges Profil auf, wobei jeweils ein Schenkel eine kammartige Form aufweist. Zinken der kammartigen Form umschließen die an dem Magnetkörper 114 ausgebildeten Schleifschuhe 436. Jeweils zwei Abschirmvorrichtungen 116 umschließen die Schleifschuhe 436 von zwei gegenüberliegenden Seiten. Dabei sind die jeweils paarweise angeordneten zwei Abschirmvorrichtungen 116 an der einander gegenüberliegenden Stirnseite elektrisch voneinander isoliert. Die Abschirmvorrichtungen 116 sind seitlich mit Befestigungseinrichtungen 438 mit dem Magnetkörper 114 verbunden. Die paarweise angeordneten zwei Abschirmvorrichtungen 116 sind mit einem weiteren paar von zwei Abschirmvorrichtungen 116 in einer Reihe an dem Magnetkörper 114 angeordnet. Die dabei aneinander zugewandten Stirnseiten der Abschirmvorrichtungen 116 sind voneinander elektrisch isoliert.

Fig. 7 zeigt eine vereinfachte Darstellung eines Elektroblechs 320 einer Abschirmvorrichtung gemäß einem Ausführungsbeispiel der vorliegenden Erfindung. Bei der Abschirmvorrichtung kann es sich um ein Ausführungsbeispiel einer in den vorangegangenen Figuren mit dem Bezugszeichen 116 versehenen Abschirmvorrichtung handeln. Bei dem Elektroblech 320 kann es sich um ein Ausführungsbeispiel eines in Figur Fig. 3 bis Fig. 5 gezeigten Elektroblechs 320, 322, 396, 328 handeln. Dabei kann das Elektroblech 320 auch als ein Transformatorenblech 320 bezeichnet werden.

Das Elektroblech 320 weist dem in Fig. 7 dargestellten Ausführungsbeispiel eine L-förmige Grundstruktur auf bzw. eine Grundform eines L-Profils. Dabei weist ein Schenkel Aussparungen auf, sodass sich eine kammartige Form ergibt. In dem dargestellten Ausführungsbeispiel weist der Schenkel sechs Zinken mit dazwischen fünf vollständigen Aussparungen auf, wobei an dem in der Darstellung rechten Ende des Elektroblechs 320 noch eine weitere sechste Aussparung angedeutet ist. Die genannten Aussparungen weisen eine Form auf, die einer Außenkontur der an dem Magnetkörper 114 angeordneten Schleifschuhen entspricht. Für Montagezwecke weisen die sechs Zinken jeweils ein Durchgangsloch auf. Eine gleichgroße Anzahl von Durchgangslöchern ist in dem weiteren Schenkel des L-förmigen Elektroblechs 320 ausgeformt.

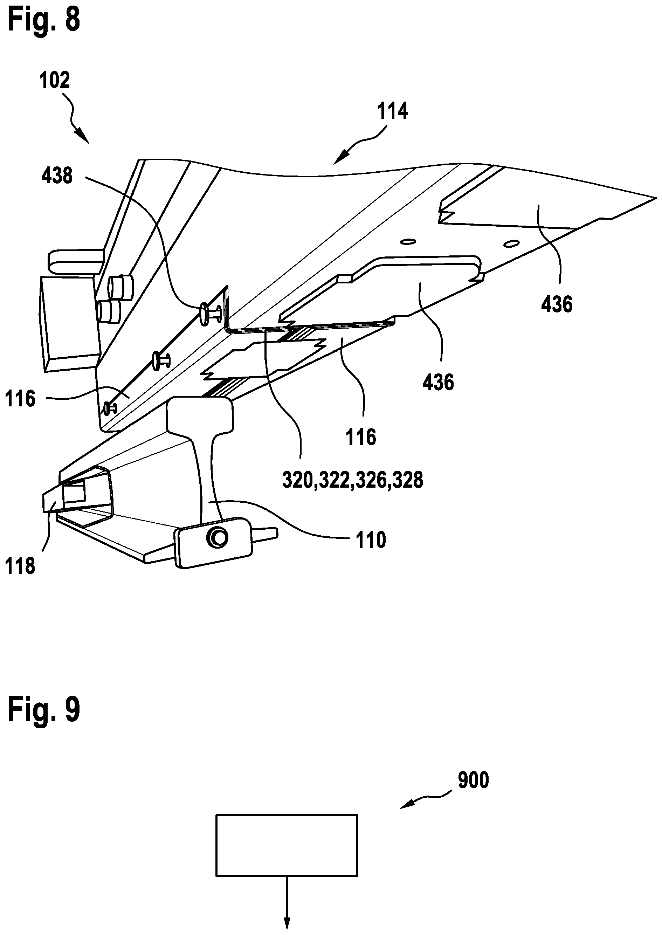

Fig. 8 zeigt eine 3D-Darstellung einer Schienenbremse 102 mit daran angeordneter Abschirmvorrichtung 116 gemäß einem Ausführungsbeispiel der vorliegenden Erfindung. Bei der Schienenbremse 102 kann es sich um ein Ausführungsbeispiel einer in Fig. 1 gezeigten Schienenbremse 102 handeln. Die Schienenbremse 102 ist oberhalb einer Schiene 110 angeordnet. An der Schiene 110 ist ein signaltechnisches Gerät 118 angeordnet. An der Schienenbremse 102 sind zwei Abschirmvorrichtungen 116 sich gegenüberliegend angeordnet. Jede der beiden Abschirmvorrichtungen 116 wird aus vier Elektroblechen 320, 322, 326, 328 gebildet. Die Elektrobleche 320, 322, 326, 328 weisen eine zu dem in Fig. 7 dargestellten Ausführungsbeispiel eines Elektroblechs 320 ähnliche Formen oder Kontur auf. Dabei ist ein Innenwinkel zwischen den beiden Schenkeln der L-förmigen Elektrobleche 320, 322, 326, 328 kleiner, als ein Außenwinkel der Magnetkörper 114, an dem die Abschirmvorrichtung 116 angeordnet ist. Weiterhin ist in dem in Fig. 8 dargestellten Ausführungsbeispiel der Innenwinkel des zweiten Elektroblechs 322 kleiner dem Innenwinkel des ersten Elektroblechs 320. So weist ein weiter von dem Magnetkörper 114 entferntes Elektroblech 320, 322, 326, 328 einen kleineren Innenwinkel auf, als ein näher an dem Magnetkörper 114 angeordnetes Elektroblech 320, 322, 326, 328. im Zusammenspiel mit der Befestigungseinrichtung 438 werden die Elektrobleche 320, 322, 326, 328 unter Spannung an dem Magnetkörper 114 montiert. Vorteilhaft kann so eine vibrationsarme Montage der Abschirmvorrichtung 116 an dem Magnetkörper 114 erfolgen.

Fig. 9 zeigt ein Ablaufdiagramm eines Verfahrens 900 gemäß einem Ausführungsbeispiel der vorliegenden Erfindung. Das Verfahren 900 zum Betreiben einer Schienenbremse mit einer Abschirmvorrichtung schafft eine eine signaltechnische Abschirmung des Magnetkörpers der Schienenbremse.

Die beschriebenen Ausführungsbeispiele sind nur beispielhaft gewählt und können innerhalb des von den Ansprüchen festgelegten Schutzumfang miteinander kombiniert werden.

### Bezugszeichenliste

- 100: Schienenfahrzeug
- 102: Schienenbremse
- 104: Wagenkasten
- 106: Drehgestell
- 108: Radsatz
- 110: Schiene
- 112: Radscheibe
- 114: Magnetkörper
- 116: Abschirmvorrichtung

- 220: erste Schicht
- 222: zweite Schicht
- 224: Isolationsschicht

- 316a: (erste) Abschirmvorrichtung
- 316b: (zweite) Abschirmvorrichtung
- 316c: (erste) Abschirmvorrichtung
- 316d: (zweite) Abschirmvorrichtung
- 318a: signaltechnisches Gerät
- 318b: signaltechnisches Gerät
- 318c: signaltechnisches Gerät
- 320: erste ferromagnetische Schicht, Elektroblech
- 322: zweite ferromagnetische Schicht, Elektroblech
- 326: dritte ferromagnetische Schicht, Elektroblech
- 328: vierte ferromagnetische Schicht, Elektroblech
- 330: Schienenfahrweg, Fahrweg
- 332: elektrische Isolation

- 436: Schleifschuh
- 438: Befestigungseinrichtung

- 900: Verfahren

## Patentansprüche

1. Abschirmvorrichtung (116; 316a, 316b, 316c, 316d) zum Leiten eines magnetischen Feldes für eine Schienenbremse (102) eines Schienenfahrzeugs (100), wobei die Schienenbremse (102) zumindest einen Magnetkörper (114) aufweist, wobei die Abschirmvorrichtung (116; 316a, 316b, 316c, 316d) zumindest die folgenden Merkmale aufweist:
eine erste Schicht (220; 320), die an dem Magnetkörper (114) angeordnet oder anordenbar ist;
zumindest eine zweite Schicht (222; 322), wobei sich eine äußere Kontur der ersten Schicht (220; 320) von einer äußeren Kontur der zweiten Schicht (222; 322) unterscheidet; und
eine Isolationsschicht (224), die zwischen der ersten Schicht (220; 320) und der zweiten Schicht (222; 322) angeordnet ist, wobei die Isolationsschicht (224) ausgebildet ist, um eine elektrische Isolation der beiden Schichten (220, 222; 320, 322) zu schaffen.

2. Abschirmvorrichtung (116; 316a, 316b, 316c, 316d) gemäß Anspruch 1, bei die erste Schicht (220; 320) ein erstes leitfähiges und/oder ferromagnetisches Material aufweist und/oder die zweite Schicht (222; 322) ein zweites leitfähiges und/oder ferromagnetisches Material aufweist, wobei das erste leitfähige und/oder ferromagnetische Material und das zweite leitfähige und/oder ferromagnetische Material identisch oder voneinander verschieden sind.

3. Abschirmvorrichtung (116; 316a, 316b, 316c, 316d) gemäß einem der vorangegangenen Ansprüche, die eine dritte Schicht (326) und eine weitere Isolationsschicht aufweist, die zwischen der zweiten Schicht (222; 322) und der dritten Schicht (326) angeordnet ist, wobei die weitere Isolationsschicht eine elektrische Isolation der zweiten Schicht (222; 322) und der dritten Schicht (326) gegeneinander schafft, wobei eine äußere Kontur der dritten Schicht (326) der äußeren Kontur der zweiten Schicht (222; 322) oder der äußeren Kontur der ersten Schicht (220; 320) entspricht, wobei die dritte Schicht (326) ein leitfähiges und/oder ferromagnetisches Material aufweist.

4. Abschirmvorrichtung (116; 316a, 316b, 316c, 316d) gemäß einem der vorangegangenen Ansprüche, wobei ein Elektroblech (320, 322, 326, 328) und/oder Transformatorenblech (320, 322, 326, 328) als die erste Schicht (220; 320) und/oder die zweite Schicht (222; 322) und/oder die dritte Schicht (326) verwendet wird, wobei das Elektroblech (320, 322, 326, 328) und/oder das Transformatorenblech (320, 322, 326, 328) die Isolationsschicht (224) umfasst.

5. Magnetkörper (114) für eine Schienenbremse (102) eines Schienenfahrzeugs (100), wobei der Magnetkörper (114) zumindest eine Abschirmvorrichtung (116; 316a, 316b, 316c, 316d) gemäß einem der vorangegangenen Ansprüche aufweist.

6. Magnetkörper (114) gemäß Anspruch 5, wobei der Magnetkörper (114) zumindest eine zweite Abschirmvorrichtung (116; 316a, 316b, 316c, 316d) gemäß einem der Ansprüche 1 bis 5 aufweist.

7. Magnetkörper (114) gemäß einem der Ansprüche 5 bis 6, bei dem die Abschirmvorrichtung (116; 316a, 316b, 316c, 316d) im montierten Zustand der Schienenbremse (102) auf einer der Schiene (110) zugewandten Seite des Magnetkörpers (114) angeordnet ist und/oder im montierten Zustand der Schienenbremse (102) im Schienenfahrweg (330) nach innen gerichtet angeordnet ist und/oder im montierten Zustand der Schienenbremse (102) im Schienenfahrweg (330) nach außen gerichtet angeordnet ist.

8. Magnetkörper (114) gemäß einem der Ansprüche 6 bis 7, bei dem die erste Abschirmvorrichtung (116; 316a, 316b, 316c, 316d) im montierten Zustand der Schienenbremse (102) zumindest teilweise im Schienenfahrweg (330) nach innen gerichtet angeordnet ist und die zweite Abschirmvorrichtung (116; 316a, 316b, 316c, 316d) im montierten Zustand der Schienenbremse (102) zumindest teilweise im Schienenfahrweg (330) nach außen gerichtet angeordnet ist, wobei die erste Abschirmvorrichtung (116; 316a, 316b, 316c, 316d) und die zweite Abschirmvorrichtung (116; 316a, 316b, 316c, 316d) zueinander elektrisch isoliert sind.

9. Magnetkörper (114) gemäß einem der Ansprüche 5 bis 8, der zumindest eine Befestigungseinrichtung (438) zum Befestigen der Abschirmvorrichtung (116; 316a, 316b, 316c, 316d) an dem Magnetkörper (114) aufweist, wobei die Befestigungseinrichtung (438) zur ersten Schicht (220; 320) und zur zweiten Schicht (222; 322) elektrisch isoliert ist.

10. Schienenbremse (102) für ein Schienenfahrzeug (10C), wobei die Schienenbremse (102) zumindest eine Abschirmvorrichtung (116; 316a, 316b, 316c, 316d) und/oder einen Magnetkörper (114) gemäß einem der vorangegangenen Ansprüche aufweist.

## Claims

1. Screening device (116; 316a, 316b, 316c, 316d) for conducting a magnetic field for a rail brake (102) of a rail vehicle (100), wherein the rail brake (102) comprises at least one magnetic body (114), the screening device (116; 316a, 316b, 316c, 316d) having at least the following features:
a first layer (220; 320) which is or can be arranged on the magnetic body (114);
at least one second layer (222; 322) such that an outer contour of the first layer (220; 320) is undercut by an outer contour of the second layer (222; 322); and
an insulating layer (224) arranged between the first layer (220; 320) and the second layer (222; 322), such that the insulation layer (224) is designed to provide electrical insulation between the two layers (220, 222; 320, 322).

2. Screening device (116; 316a, 316b, 316c, 316d) according to Claim 1, in which the first layer (220; 320) comprises a first conductive and/or ferromagnetic material and/or the second layer comprises a second conductive and/or ferromagnetic material, such that the first conductive and/or ferromagnetic material and the second conductive and/or ferromagnetic material are identical to or different from one another.

3. Screening device (116; 316a, 316b, 316c, 316d) according to either of the preceding claims, which comprises a third layer (326) and a further insulating layer arranged between the second layer (222; 322) and the third layer (326), such that the said further insulating layer provides electrical insulation between the second layer (222; 322) and the third layer (326), wherein an outer contour of the third layer (326) corresponds to the outer contour of the second layer (222; 322) or to the outer contour of the first layer (220; 320), and the third layer (326) comprises a conductive and/or ferromagnetic material.

4. Screening device (116; 316a, 316b, 316c, 316d) according to any of the preceding claims, wherein an electrical sheet (320, 322, 326, 328) and/or a transformer sheet (320, 322, 326, 328) is used as the first layer (220; 320) and/or the second layer (222; 322) and/or the third layer (326), wherein the electrical sheet (320, 322, 326, 328) and/or the transformer sheet (320, 322, 326, 328) contains the insulating layer (224).

5. Magnetic body (114) for a rail brake (102) of a rail vehicle (100), wherein the magnetic body (114) comprises at least one screening device (116; 316a, 316b, 316c, 316d) according to any of the preceding claims.

6. Magnetic body (114) according to Claim 5, wherein the magnetic body (114) comprises at least a second screening device (116; 316a, 316b, 316c, 316d) according to any of Claims 1 to 5.

7. Magnetic body (114) according to either of Claims 5 or 6, in which, in the assembled condition of the rail brake (102), the screening device (116; 316a, 316b, 316c, 316d) is arranged on a side of the magnetic body (114) facing toward the rail (110), and/or in the assembled condition of the rail brake (102) it is arranged in the rail track (330) directed inwards and/or in the assembled condition of the rail brake (102) it is arranged in the rail track (330) directed outwards.

8. Magnetic body (114) according to either of Claims 6 or 7, in which, in the assembled condition of the rail brake (102), the first screening device (116; 316a, 316b, 316c, 316d) is arranged at least partially inwards in the rail track (330) and in the assembled condition of the rail brake (102) the second screening device (116; 316a, 316b, 316c, 316d) is arranged at least partially outward in the rail track (330), and the first screening device (116; 316a, 316b, 316c, 316d) and the second screening device (116; 316a, 316b, 316c, 316d) are electrically insulated from one another.

9. Magnetic body (114) according to any of Claims 5 to 8, which comprises at least one fastening device (438) for fixing the screening device (116; 316a, 316b, 316c, 316d) onto the magnetic body (114), wherein the said fastening device (438) is electrically insulated from the first layer (220; 320) and from the second layer (222; 322).

10. Rail brake (102) for a rail vehicle (100), such that the rail brake (102) comprises at least one screening device (116; 316a, 316b, 316c, 316d) and/or a magnetic body (114) according to any of the preceding claims.

## Revendications

1. Dispositif (116 ; 316a, 316b, 316c, 316d) de blindage pour la conduction du champ magnétique d'un frein (102) ferroviaire d'un véhicule (100) ferroviaire, le frein (102) ferroviaire ayant au moins un corps (114) magnétique, le dispositif (116 ; 316a, 316b, 316c, 316d) de blindage ayant au moins les caractéristiques suivantes :
une première couche (20 ; 320), qui est mise sur le corps (114) magnétique ou qui peut l'être ;
au moins une deuxième couche (222 ; 322), un contour extérieur de la première couche (220 ; 320) se distinguant d'un contour extérieur de la deuxième couche (222 ; 322) ; et
une couche (224) isolante, qui est disposée entre la première couche (220 ; 320) et la deuxième couche (222 ; 322), la couche (224) isolante étant constituée pour donner une isolation électrique des deux couches (220, 222 ; 320, 322).

2. Dispositif (116 ; 316a, 316b, 316c, 316d) de blindage suivant la revendication 1, dans lequel la première couche (220 ; 320) a un premier matériau conducteur et/ou ferromagnétique et/ou la deuxième couche (222 ; 322) a un deuxième matériau conducteur et/ou ferromagnétique, le premier matériau conducteur et/ou ferromagnétique et le deuxième matériau conducteur et/ou ferromagnétique étant les mêmes ou étant différents l'un de l'autre.

3. Dispositif (116 ; 316a, 316b, 316c, 316d) de blindage suivant l'une des revendications précédentes, qui a une troisième couche (326) et une autre couche isolante, qui est disposée entre la deuxième couche (222 ; 322) et la troisième couche (326), l'autre couche isolante donnant une isolation électrique de la deuxième couche (222 ; 322) et de la troisième couche (326), un contour extérieur de la troisième couche (326) correspondant au contour extérieur de la deuxième couche (222 ; 322) ou au contour extérieur de la première couche (220 ; 320), la troisième couche (326) ayant un matériau conducteur et/ou ferromagnétique.

4. Dispositif (116 ; 316a, 316b, 316c, 316d) de blindage suivant l'une des revendications précédentes, dans lequel une tôle (320, 322, 326, 328) électrique et/ou une tôle (320, 322, 326, 328) de transformateur est utilisée comme première couche (220 ; 320) et/ou comme deuxième couche (222 ; 322) et/ou comme troisième couche (326), la tôle (320, 322, 326, 328) électrique et/ou la tôle (320, 322, 326, 328) de transformateur comprend la couche (224) isolante.

5. Corps (114) magnétique pour un frein (102) ferroviaire d'un véhicule (100) ferroviaire, le corps (114) magnétique ayant au moins un dispositif (116 ; 316a, 316b, 316c, 316d) de blindage suivant l'une des revendications précédentes.

6. Corps (114) magnétique suivant la revendication 5, dans lequel le corps (114) magnétique a au moins un deuxième dispositif (116 ; 316a, 316b, 316c, 316d) de blindage suivant l'une de revendications 1 à 5.

7. Corps (114) magnétique suivant l'une des revendications 5 à 6, dans lequel le dispositif (116 ; 316a, 316b, 316c, 316d) de blindage est disposé, lorsque le frein (102) ferroviaire est à l'état monté, d'un côté, tourné vers le rail (110), du corps (114) magnétique et/ou est disposé, lorsque le frein (102) ferroviaire est à l'état monté, dans la voie (330) de circulation ferroviaire, en étant dirigé vers l'intérieur, et/ou lorsque le frein (102) ferroviaire est à l'état monté, dans la voie (330) de circulation ferroviaire, en étant dirigé vers l'extérieur.

8. Corps (114) magnétique suivant l'une des revendications 6 à 7, dans lequel le premier dispositif (116 ; 316a, 316b, 316c, 316d) de blindage est disposé, lorsque le frein (102) ferroviaire est à l'état monté, au moins en partie, dans la voie (330) de circulation ferroviaire, en étant dirigé vers l'intérieur, et le deuxième dispositif (116 ; 316a, 316b, 316c, 316d) de blindage est disposé, lorsque le frein (102) ferroviaire est à l'état monté, au moins en partie, dans la voie (330) de circulation ferroviaire, en étant dirigé vers l'extérieur, le premier dispositif (116 ; 316a, 316b, 316c, 316d) de blindage et le deuxième dispositif (116 ; 316a, 316b, 316c, 316d) de blindage étant isolés électriquement l'un par rapport à l'autre.

9. Corps (114) magnétique suivant l'une des revendications 5 à 8, qui a au moins un dispositif (438) de fixation pour fixer le dispositif (116 ; 316a, 316b, 316c, 316d) de blindage au corps (114) magnétique, le dispositif (438) de fixation étant isolé électriquement par rapport à la première couche (220 ; 320) et par rapport à la deuxième couche (222 ; 322).

10. Frein (102) ferroviaire d'un véhicule (100) ferroviaire, le frein (102) ferroviaire ayant au moins un dispositif (116 ; 316a, 316b, 316c, 316d) de blindage et/ou un corps (114) magnétique suivant l'une des revendications précédentes.
